# EUROPÄISCHE PATENTANMELDUNG

(11) **EP 3 859 481 A1**
(43) Veröffentlichungstag der Anmeldung: **04.08.2021**
(21) Anmeldenummer: 20215907.5
(22) Anmeldetag: 21.12.2020
(51) Int. Cl.: G05D 1/10

(54) **VERFAHREN ZUR VERBESSERUNG EINER NAVIGATIONSGÜTE DURCH AKTIVE GESTALTUNG EINER BEWEGUNGSFORMATION EINES KOLLABORIERENDEN SCHWARMS AUS MOBILEN UNBEMANNTEN EINHEITEN**

(30) Priorität: 31.01.2020 DE 102020000663
(71) Anmelder: MBDA Deutschland GmbH, 86529 Schrobenhausen (DE)
(72) Erfinder: GER, Michael, 86156 Augsburg (DE); HERBOLD, Georg, 86529 Schrobenhausen-Sandizell (DE)
(74) Vertreter: Isarpatent

(57) **Zusammenfassung**

Ein Verfahren zur Verbesserung einer Navigationsgüte durch aktive Gestaltung einer Bewegungsformation eines kollaborierenden Schwarms aus mobilen unbemannten Einheiten, insbesondere einer Flugformation eines Schwarms aus Drohnen, umfasst Einnehmen einer Basisvernetzungsstruktur durch die mobilen Einheiten innerhalb einer Bewegungsformation, wobei die Basisvernetzungsstruktur eine relative geometrische Grundanordnung in der Positionierung der mobilen Einheiten innerhalb der Bewegungsformation definiert; kontinuierliches gegenseitiges Bestimmen aktueller Relativvermessungen der mobilen Einheiten durch die mobilen Einheiten; dynamisches Anpassen aktueller Relativpositionen durch die mobilen Einheiten entsprechend der Basisvernetzungsstruktur; und individuelles oder gemeinschaftliches Durchwechseln der Positionierungen der mobilen Einheiten in der Bewegungsformation unter Einhaltung der Basisvernetzungsstruktur, wobei die aktuellen Relativvermessungen nach oder während jeder Neupositionierung erneut bestimmt werden, wobei eine Bestimmung von Absolutpositionen der mobilen Einheiten auf Basis der neubestimmten aktuellen Relativvermessungen präzisiert wird.

## Beschreibung

Die vorliegende Erfindung betrifft ein Verfahren zur Verbesserung einer Navigationsgüte durch aktive Gestaltung einer Bewegungsformation eines kollaborierenden Schwarms aus mobilen unbemannten Einheiten. Die vorliegende Erfindung betrifft insbesondere ein Verfahren zur Gestaltung einer Flugformation eines kollaborierenden Schwarms aus Drohnen.

Im militärischen und anderen technischen Bereichen wird in jüngerer Zeit vermehrt vorgeschlagen, Schwärme bzw. Multiagentensysteme aus halb- oder vollautonomen mobilen unbemannten Einheiten wie Drohnen oder dergleichen Flugsystemen (UAS) in unterschiedlichen Anwendungen einzusetzen, siehe beispielsweise die Druckschrift EP 3 454 316 A1. UAS werden zwar bereits seit geraumer Zeit für unterschiedlichste Zwecke von Überwachungs- und Aufklärungsmissionen bis hin zum taktischen Angriff eingesetzt. Die meisten aktuellen Systeme erfordern jedoch nach wie vor eine kontinuierliche Kontrolle durch einen speziellen Piloten oder Operator, welcher von zahlreichen telemetrisch vernetzten Analysten unterstützt wird. Hierdurch wird die Skalierbarkeit und Kosteneffizienz von UAS-Einsätzen grundsätzlich eingeschränkt. Insbesondere Einsätze in entfernten Einsatzfeldern und in störanfälligen Umgebungen stellen hierbei nach wie vor erhebliche Herausforderungen dar.

Um diesem Bedarf gerecht zu werden, verfolgt beispielsweise die Defense Advanced Research Projects Agency (DARPA) unter anderem ein Projekt unter dem Titel "Collaborative Operations in Denied Environment" (CODE), welches auf die Verbesserung der kollaborativen Autonomie von UAS abstellt. Ziel hierbei ist es, dass unbemannte Fahrzeuge kontinuierlich ihre eigenen Zustände und Umgebungen evaluieren und einem Missionsoperator Empfehlungen für koordinierte UAS-Aktionen vorlegen, welcher dann derartige Schwarmaktionen genehmigen oder ablehnen und alle Missionsänderungen steuern kann. Mit Hilfe derartigen kollaborativer Ansätze könnten UAS sich zumindest zu einem gewissen Grad eigenständig an dynamische Situationen und unerwartete Bedrohungen anpassen.

Die Missionsgestaltung kann bei diesen und ähnlichen Anwendungen sehr variabel definiert sein und von einfacher Formationseinhaltung bis zu komplexeren Aufgabenstellungen variieren, welche beispielsweise die Interaktionen mit Zielen und/oder der Umgebung umfassen können. Die Gestaltung einer Schwarmkonstellation bzw. Schwarmformation erfolgt typischerweise bisher ohne Berücksichtigung von Navigationsaspekten der mobilen Einheiten. Vielmehr dienen häufig Positionsinformationen als Grundlage zur Koordination der mobilen Einheiten, welche von externer Tracking- und/oder Positionierungssensorik (z.B. von einem globalen Navigationssatellitensystem, GNSS) und/oder einer externen Systemsteuerung bereitgestellt werden. Bei realen Einsatzszenarien kann die Verbindung zu derartigen Informationsquellen jedoch zumindest temporär ausgesetzt sein.

Die Druckschriften EP 2 184 617 A3, EP 2 730 887 B1 und EP 2 749 842 A1 beschreiben beispielsweise Systeme und Verfahren zur kollaborativen Navigation unbemannter mobiler Einheiten.

Vor diesem Hintergrund liegt der vorliegenden Erfindung die Aufgabe zugrunde, robustere und gleichzeitig präzise Lösungen für die Konstellationsgestaltung von Schwärmen aus mobilen unbemannten Einheiten zu finden.

Erfindungsgemäß wird diese Aufgabe gelöst durch ein Verfahren mit den Merkmalen des Patentanspruchs 1 und durch einen Schwarm aus einer Vielzahl mobiler unbemannter Einheiten mit den Merkmalen des Patentanspruchs 13.

Demgemäß ist ein Verfahren zur Verbesserung einer Navigationsgüte durch aktive Gestaltung einer Bewegungsformation eines kollaborierenden Schwarms aus mobilen unbemannten Einheiten vorgesehen, insbesondere einer Flugformation eines Schwarms aus Drohnen. Hierbei weist jede mobile Einheit auf: ein Positionssensorsystem, welches zur Bestimmung einer momentanen Absolutposition der jeweiligen mobilen Einheit und momentanen Relativvermessungen zumindest von benachbarten mobilen Einheiten gegenüber der jeweiligen mobilen Einheit in der Bewegungsformation ausgebildet ist; eine Kommunikationseinheit zur Datenkommunikation der jeweiligen mobilen Einheit mit den übrigen mobilen Einheiten über ein drahtloses Schwarmnetzwerk; und eine Flugführungseinheit, welche zur Kommandierung und Umsetzung einer Bewegung der jeweiligen mobilen Einheit ausgebildet ist. Das Verfahren umfasst Einnehmen einer Basisvernetzungsstruktur durch die mobilen Einheiten innerhalb der Bewegungsformation, wobei die Basisvernetzungsstruktur eine relative geometrische Grundanordnung in der Positionierung der mobilen Einheiten innerhalb der Bewegungsformation definiert; kontinuierliches gegenseitiges Bestimmten der aktuellen Relativvermessungen der mobilen Einheiten durch die mobilen Einheiten; dynamisches Anpassen aktueller Relativpositionen durch die mobilen Einheiten entsprechend der Basisvernetzungsstruktur; und individuelles oder gemeinschaftliches Durchwechseln der Positionierungen der mobilen Einheiten in der Bewegungsformation unter Einhaltung der Basisvernetzungsstruktur, wobei die aktuellen Relatiwermessungen nach oder während jeder Neupositionierung erneut bestimmt werden, wobei eine Bestimmung der Absolutpositionen der mobilen Einheiten auf Basis der neubestimmten aktuellen Relativvermessungen präzisiert wird.

Ferner ist ein Schwarm aus einer Vielzahl derartiger mobiler unbemannter Einheiten vorgesehen, wobei jede mobile Einheit ferner eine Steuereinrichtung aufweist, welche zur Steuerung der jeweiligen mobilen Einheit in Kommunikation mit den übrigen mobilen Einheit über das Schwarmnetzwerk zur Durchführung des erfindungsgemäßen Verfahrens ausgebildet ist.

Eine der vorliegenden Erfindung zugrunde liegende Idee besteht darin, die Navigationsgüte und Navigationsrobustheit eines kollaborierenden Schwarms deutlich zu verbessern, indem dem Verbund einerseits eine vorteilhafte geometrische Grundkonstellation gewissermaßen aufgezwungen wird und andererseits innerhalb dieser Grundkonstellation vielfache Positionswechsel durchgeführt werden, um die hierdurch erhaltenen ergänzenden Positionsinformation zur Verbesserung der Positionsgenauigkeit der eingenommenen Formation zu verwenden. Die mobilen Einheiten sind hierzu jeweils eigenständig in der Lage, absolute Positionen und relative Positionen/Ausrichtungen zu erfassen, sodass vorübergehende oder länger anhaltende Störungs- und/oder Ausfallphasen eines externen Steuer- und/oder Navigationssystems in robuster Weise überwunden werden können. Damit kann das erfindungsgemäße System eine Navigation praktisch unabhängig von globalen Navigationssatellitensystemen oder ähnlicher externer Sensorik umsetzen. Der erfindungsgemäße Ansatz kombiniert hierbei eine für die Navigation optimierte Konstellationsfindung mit einer dynamischen, d.h. aktiven, Anpassung derselben.

Beispielsweise können Messungen einer oder mehrerer inertialer Messeinheiten (IMU) und gegenseitige Vermessungen der mobilen Einheiten zusammen mit einer günstig gewählten Basisvernetzungsstruktur (d.h. einer geometrischen Konstellationsdefinition) genutzt werden, um Positionsschätzungen der einzelnen mobilen Einheiten und damit der Gesamtformation deutlich zu verbessern und die resultierenden Unsicherheiten minimal zu halten. Dabei kann die geometrische Konstellation der einzelnen mobilen Einheiten derart ausgebildet werden, dass sich in der Summe eine verbesserte Navigationsleistung und gesteigerte Robustheit für das Gesamtsystem und damit schlussendlich auch für einzelne mobile Einheiten ergibt.

Die einzelnen Einheiten werden hierbei als separate Navigationseinheiten betrachtet und verfügen generell über eine inertiale oder anders definierte Basissensorik samt zusätzlichen Stützsensoren, die unter anderem für die gegenseitige Vermessung genutzt werden. Diese Informationen können über das Schwarmnetzwerk unter den mobilen Einheiten ausgetauscht werden, sodass im Gesamtsystem die momentanen Zustandsänderungen der einzelnen Einheiten und die gegenseitigen Vermessungen zur Verfügung stehen und diese fortlaufend aktualisiert werden können. Derartige Zustandsangaben umfassen hierbei mindestens die gemessenen bzw. geschätzten Absolutpositionen der einzelnen Einheiten, können jedoch um weitere Komponenten wie Geschwindigkeit, Lagewinkel usw. mit dazugehörigen Unsicherheiten ergänzt werden.

Ungenauigkeiten in der Position können hierbei insbesondere aufgrund von Sensordriften der entsprechenden eingesetzten Inertialsensoren entstehen, welche mit fortschreitender Zeit anwachsen. Die mit einer IMU bestimmten Absolutpositionen unterliegen somit typischerweise einem Fehler und unterscheiden sich somit von der tatsächlichen, physikalischen Positionen der jeweiligen Einheit. Die gegenseitigen Vermessungen der Einheiten erfolgen hingegen von der tatsächlichen Position der Einheiten aus. Richtungsvektoren, welche sich beispielsweise aus den gegenseitigen Vermessungen ergeben, zeigen somit insbesondere auf die wahren Positionen der Einheiten (unter Vernachlässigung der Fehler der Sensorik für die Messung der Relativposition). Werden die Positionen nun durchgewechselt, so zeigen die Richtungsvektoren jederzeit auf die wahren Positionen. Diese Information wird erfindungsgemäß zur systematischen Minimierung der Positionsungenauigkeit und damit zur Optimierung der Präzision in der Einhaltung der Bewegungsformation verwendet. Beispielsweise können vorzeichenbehaftete Skalierungsfehler durch eine Spiegelung der einzelnen Positionen eliminiert werden. Im Ergebnis ergibt sich somit eine bessere Beobachtung des Gesamtsystems mit minimierten Restfehlern.

Die Aufstellung der Basisvernetzungsstruktur kann hierbei von gewissen Optimierungsbedingungen in Abhängigkeit von Missionsvorgaben erfolgen. Beispielsweise können zulässige Flächen- und/oder Voluminaausbreitungen für die Bewegungsformation des Schwarms definiert sein, innerhalb derer eine geeignete Konstellation zu finden ist. Komplexere Missionen können beispielsweise längere Phasen von Anflug, Aufklärung und eigentlichem Einsatz umfassen, wobei entsprechende missionsbedingte Randbedingungen grundverschieden sein können. Beispielsweise sind bei einem Anflug über längere Wegstrecken zumeist keine besonderen Bedingungen gestellt, sodass die Konstellation primär auf die beste Navigationsperformance, d.h. die größtmögliche Positionsgenauigkeit, optimiert werden kann. Vorstellbar dabei wäre ebenso ein "Terrain-Following" oder weitere Navigationsrandbedingungen, was zu einer speziellen Gestaltung der Konstellation führen kann. Im Schwarmverbund mit mehreren Einheiten kann eine optimierte Basisvernetzungsstruktur und damit Gesamtkonstellation gefunden werden, die diesen entsprechenden Missions- und Navigationsbedingungen genügt.

Eine mobile unbemannte Einheit im Sinne der Erfindung kann insbesondere eine Drohne sein, wobei der Begriff Drohne ein allgemeines unbemanntes Luftfahrzeug, d.h. ein "Unmanned Aircraft System" (UAS) bzw. "Unmanned Aerial Vehicle" (UAV) bezeichnet. Drohnen im Sinne der Erfindung umfassen unter anderem Aufklärungsdrohnen, unbemannte militärische Aufklärungs- und/oder Kampfflugzeuge, Kleindrohnen, aber auch unbemannte bewaffnete Luftfahrzeuge wie Kampfdrohnen usw. Drohnen im Sinne der Erfindung umfassen somit unter anderem "Micro Aerial Vehicles" (MAV), "Small Unmanned Aircraft" (SUA), Nano-, Micro- und Mini-UAS sowie Close- und Tactical-UAS, "Medium Altitude Long Endurance" (MALE) und "High Altitude Long Endurance" (HALE) UAS, Unmanned Reconnaissance Aerial Vehicles" (URAV), "Unmanned Combat Aerial Vehicles" (UCAV) bzw. "Unmanned Combat Aerial Systems" (UCAS) und weitere dem Fachmann bekannte unbemannte Luftfahrzeuge.

Neben unbemannten Luftfahrzeugen umfasst der Begriff mobile Einheit gemäß der Erfindung jedoch ebenso weitere unbemannte Fahrzeuge wie beispielsweise Wasserfahrzeuge und Landfahrzeuge sowie allgemeine kollaborierende Multiagentensysteme bzw. gemeinsam operierende Verbände aus mobilen Einheiten.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das Durchwechseln der Positionierungen kontinuierlich fortgesetzt werden, um eine vorgegebene Positionsgenauigkeit für die Bewegungsformation zu erreichen und/oder zu halten. Prinzipiell kann diese Positionsvariierung auch unter sich ändernden Randbedingungen fortlaufen, beispielsweise wenn aufgrund einer Missionsänderung eine geänderte Basisvernetzungsstruktur und/oder Bewegungsformation notwendig wird. In der beispielhaften Anwendung eines Drohnenschwarms erfolgt diese Positionsvariation somit fortlaufend im Flug.

Gemäß einer Weiterbildung kann die Basisvernetzungsstruktur ein Netzwerk von Polygonen und/oder Polyedern darstellen, an deren Eckpunkten die mobilen Einheiten positioniert sind. Die Polygone bzw. Polyeder können beispielsweise regulär sein. Diese geometrischen Konstrukte stelle hierbei gewissermaßen die "Grundgitterelemente" des Schwarmverbunds dar, denen folgend sich die einzelnen mobilen Einheiten anordnen. Beispielsweise können sich die mobilen Einheiten in Tetraedern, Hexaedern, Oktaedern oder dergleichen anordnen. Diese Grundstrukturen sind infolge geometrischer Bedingungen und verfügbarer gegenseitiger Vermessungsarten durch unterschiedliche Qualitätsmerkmale gekennzeichnet.

Gemäß einer Weiterbildung können die mobilen Einheiten an den Eckpunkten von Dreiecken und/oder Tetraedern positioniert sein. Dreiecke bzw. Tetraeder stellen hierbei die am einfachsten erweiterbare Grundstruktur dar. Durch Hinzufügen einer einzelnen Einheit entsteht nämlich bereits ein neuer Tetraeder.

Gemäß einer Weiterbildung kann die Bewegungsformation bei dem Durchwechseln der Positionierungen unverändert bleiben. Dies bedeutet, dass die nach außen hin sichtbare Flugformation eines Drohnenschwarms nach den jeweils erfolgten Positionierungswechseln in ihrer äußeren Gestalt identisch bestehen bleibt. Lediglich die Positionen mehrerer Drohnen innerhalb der Flugformation werden ausgetauscht.

Gemäß einer Weiterbildung kann das gemeinschaftliche Durchwechseln der Positionierungen einen paarweisen Positionstausch zweier mobiler Einheiten und/oder eine Positionspermutation dreier oder mehr mobiler Einheiten umfassen. Beispielsweise können die Einheiten in einer geschlossenen Kette aus zwei oder mehr Einheiten durchgewechselt werden, z.B. über eine Rotation der Einheiten entlang der Kette innerhalb der Basisvernetzungsstruktur.

Gemäß einer Weiterbildung kann das Durchwechseln der Positionierungen eine Spiegelung und/oder eine Rotation zumindest eines Bereichs der Bewegungsformation der mobilen Einheiten unter Beibehaltung der Basisvernetzungsstruktur umfassen. Beispielsweise kann die Basisvernetzungsstruktur eine Tetraedergestalt haben, z.B. ein Tetraedersystem aus 11 mobilen Einheiten. Diese grundlegende Tetraedergestalt kann nun im dreidimensionalen Raum gedreht und/oder gespiegelt werden, wobei sich die tatsächliche Bewegungsformation der Einheiten zwar im Raum ändert, z.B. eine Flugformation eines Drohnenschwarms aus 11 Drohnen, die Basisvernetzungsstruktur hierbei jedoch jederzeit bestehen bleibt.

Gemäß einer Weiterbildung können die Positionierungen einzelner und/oder mehrerer mobiler Einheiten an Flächen oder Kanten der Basisvernetzungsstruktur gespiegelt werden.

Gemäß einer Weiterbildung kann das Positionssensorsystem ein Trägheitsnavigationssystem umfassen, mit dem die Absolutposition bestimmt wird. Beispielsweise kann ein Trägheitsnavigationssystem mit einer inertialen Messeinheit (IMU) als zentraler Sensoreinheit mit mehreren Beschleunigungs- und Drehratensensoren vorgesehen sein.

Gemäß einer Weiterbildung kann das Bestimmten der Relativvermessungen Bestimmen von Richtungsvektoren der jeweiligen mobilen Einheit zu den benachbarten mobilen Einheiten umfassen.

Gemäß einer Weiterbildung kann das Positionssensorsystem ein Richtungsbestimmungssystemumfassen, mit dem die Richtungsvektoren bestimmt werden. Beispielsweise kann das Richtungsbestimmungssystem ein Kamerasystem umfassen, z.B. ein optisches und/oder ein Infrarot-Kamerasystem mit 360° Sichtabdeckung in Elevation und Azimut. Weiterhin kann das Richtungsbestimmungssystem ein Antennenpeilsystem umfassen bzw. ein Antennensystem, welches zur Peilung der mobilen Einheiten verwendet werden kann. Es versteht sich, dass der Fachmann ebenso andere bekannte Systeme verwenden kann, mit denen sich Richtungsvektoren bzw. Richtungen erfassen lassen, z.B. ein Radarsystem etc.

Gemäß einer Weiterbildung können die mobilen Einheiten weiterhin jeweils mit einer Emissionseinrichtung zur Aussendung von elektromagnetischen Signalen ausgebildet sein, welche mit dem Richtungsbestimmungssystem der jeweiligen mobilen Einheit zur Bestimmung der Richtungsvektoren erfasst werden. Beispielsweise kann die Emissionseinrichtung zur Ausstrahlung von Lichtsignalen ausgebildet sein, welche mit einem Kamerasystem erfassbar sind. Beispielsweise können hierbei LEDs mit unterschiedlicher Puslationsrate oder Codes eingesetzt werden. Damit könnte jede mobile Einheit eine eigene Signatur beim Emittieren aufweisen, welche von den weiteren Einheiten anhand des Richtungsbestimmungssystems detektiert und zugeordnet werden kann. Die elektromagnetischen Signale der Emissionseinrichtung können ebenso zur Bestimmung von Relativpositionen der mobilen Einheiten genutzt werden.

Gemäß einer Weiterbildung kann das Bestimmen der Relativvermessungen Bestimmen von Entfernungen der jeweiligen mobilen Einheit zu den benachbarten mobilen Einheiten umfassen. Hierbei können unterschiedliche dem Fachmann bekannte Ansätze bzw. Systeme zur Anwendung kommen, mit denen die Entfernungen zwischen den mobilen Einheiten bestimmbar sind. Beispielsweise kann hierzu ein Kommunikationssystem genutzt werden, indem Wellenfront, Signallaufzeit usw. ausgewertet werden. In einem anderen Beispiel kann ein Radar eingesetzt werden. Über eine Bestimmung von Richtungsvektoren und Entfernungen können beispielsweise auch momentane Relativpositionen der mobilen Einheiten bestimmt werden.

Neben Richtungsvektoren (Winkelausrichtungen) und Entfernungen umfassen Relativvermessungen im Sinne der Erfindung sämtliche physikalische Größen, welche eine relative Positionierung, Ausrichtung und/oder Bewegung der mobilen Einheiten beschreiben, d.h. es ist jedwede Form relativer Messarten umfasst. Beispielsweise können relative Geschwindigkeiten über einen Doppleranalyse von abgestrahlten elektromagnetischen Signalen bestimmt werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische perspektivische Seitenansicht eines kollaborierenden Schwarms aus mobilen unbemannten Einheiten gemäß einer Ausführungsform der Erfindung;
- Fig. 2: schematische Ansicht einer mobilen unbemannten Einheit aus dem Schwarm in Fig. 1;
- Fig. 3: schematisches Ablaufdiagramm eines Verfahrens zur Gestaltung einer Bewegungsformation des kollaborierenden Schwarms aus Fig. 1;
- Fig. 4: schematische Ansicht einer Basisvernetzungsstruktur für den Schwarm aus Fig. 1 einschließlich Skalierungsfehlern;
- Fig. 5: schematische Ansicht der Basisvernetzungsstruktur aus Fig. 4 mit möglichen Positionierungswechseln der mobilen Einheiten;
- Fig. 6: schematische Ansicht der Basisvernetzungsstruktur aus Fig. 5 nach dem Positionierungswechsel einer mobilen Einheit;
- Fig. 7: weitere schematische Ansicht der Basisvernetzungsstruktur aus Fig. 5 nach dem Positionierungswechsel einer mobilen Einheit; und
- Fig. 8: schematische Ansicht einer alternativen Basisvernetzungsstruktur für einen Schwarm aus mobilen Einheiten wie in Fig. 1.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist -jeweils mit denselben Bezugszeichen versehen.

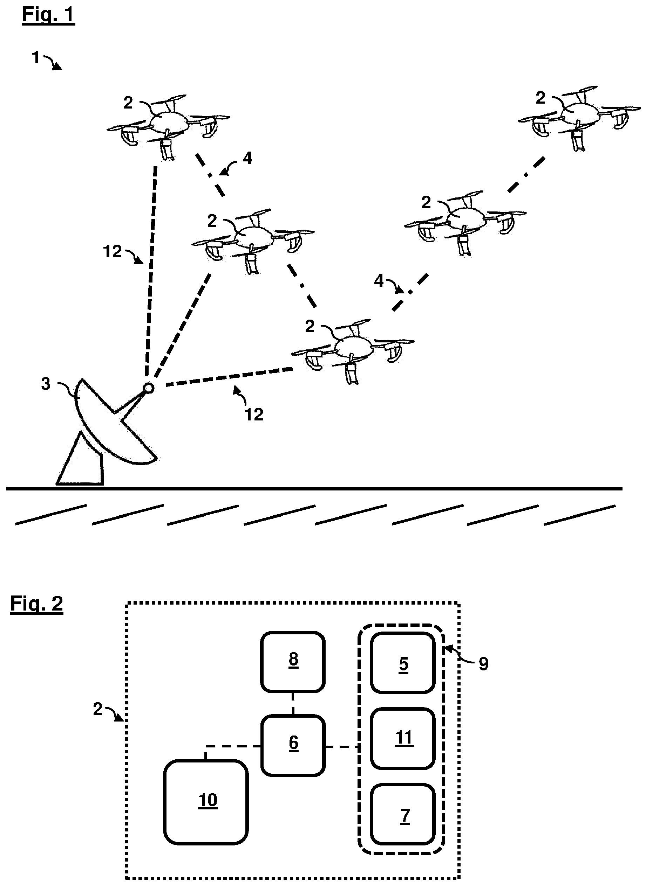

Figur 1 zeigt eine schematische perspektivische Seitenansicht eines kollaborierenden Schwarms 1 aus mobilen unbemannten Einheiten 2 gemäß einer Ausführungsform der Erfindung. In dem konkreten Ausführungsbeispiel handelt es sich bei den mobilen Einheiten um Drohnen. Eine entsprechende mobile Einheit 2 ist im Detail schematisch in Fig. 2 dargestellt. Beispielsweise kann es sich hierbei um eine Kleindrohne, eine Aufklärungsdrohne, ein unbemanntes militärisches Aufklärungsflugzeug und/oder eine Kampfdrohne oder dergleichen handeln.

Die mobilen Einheiten 2 bilden einen kollaborierenden, d.h. miteinander kommunizierenden und interagierenden, Schwarm 1, wobei die mobilen Einheiten 2 zu jedem Zeitpunkt eine bestimmte Bewegungsformation einnehmen, in welcher jeder mobilen Einheit 2 eine bestimmte momentane Position (sowie ggf. Geschwindigkeit und/oder Beschleunigung) im dreidimensionalen Raum zugeordnet ist. Prinzipiell kann ein Schwarm 1 aus derartigen mobilen Einheiten 2 hierzu von einer zentralen und ggf. bodengebundenen Systemsteuereinrichtung 3 über ein entsprechendes drahtloses Steuerungsnetzwerk 12 kommandiert und gesteuert werden. Bei Einsätzen in störanfälligen Umgebungen oder unter hoch dynamischen Bedingungen kann ein derartiger zentralisierter Ansatz jedoch unvorteilhaft sein, z.B. im Fall dass eine Kommunikationsverbindung zu dem Steuerungsnetzwerk 12 vorübergehend oder dauerhaft gestört oder völlig unterbunden wird. Um unter anderem diese Nachteile zu überwinden, sieht das vorliegende System ein dediziertes Schwarmnetzwerk 4 vor, über welches die mobilen Einheiten 2 in dezentralisierter Weise miteinander kommunizieren und Steuerkommandos austauschen können, wie im Folgenden erläutert wird.

Wie aus Fig. 2 hervorgeht, umfasst jede der mobilen Einheiten 2 hierbei zumindest eine Kommunikationseinheit 8 zur Datenkommunikation der jeweiligen mobilen Einheit 2 mit den übrigen mobilen Einheiten 2 über das drahtloses Schwarmnetzwerk 4. Ferner umfasst jede mobile Einheit 2 ein Positionssensorsystem 9, welches zur Bestimmung einer momentanen Absolutposition P der jeweiligen mobilen Einheit 2 ausgebildet ist. Zu diesem Zweck kann das Positionssensorsystem 9 ein Trägheitsnavigationssystem 5 beinhalten, z.B. mit einer IMU . Durch Integration der von der IMU gemessenen Beschleunigungen und Drehraten wird in dem Trägheitsnavigationssystem 5 laufend die räumliche Bewegung der mobilen Einheit und daraus die jeweilige geografische Position bestimmt. Messungenauigkeiten und Rauschen auf den Sensoren führt bei derartigen Messungen jedoch unvermeidlich zu sogenannten Driftfehlern in den Navigationszuständen wie Geschwindigkeit, Position, Drehraten und Winkel. Drift bedeutet in diesem Fall, dass eine Bewegung bzw. Rotation erkannt wird, obwohl das System eigentlich in einer Ruheposition ist. Im Fall einer tatsächlichen Bewegung addieren sich die entsprechenden Fehler zu der eigentlichen Bewegung hinzu. Derartige Driftfehler wachsen mit fortlaufender Dauer an und führen dazu, dass sich die Abweichung von der tatsächlichen Position immer stärker ausprägt.

Das vorliegende System minimiert derartige und andere Messungenauigkeiten, indem die Bewegungsformation der mobilen Einheiten 2 entsprechend zu den konkreten Navigations- und Missionserfordernissen in optimaler Weise gestaltet und dynamisch, d.h. aktiv, angepasst wird, wie im Folgenden erläutert wird.

Das Positionssensorsystem 9 der mobilen Einheiten 2 ist ferner jeweils zur Bestimmung von momentanen Relativpositionen zumindest von benachbarten mobilen Einheiten 2 gegenüber der jeweiligen mobilen Einheit 2 in der Bewegungsformation der mobilen Einheiten 2 ausgebildet. Je nach der konkreten Schwarmgröße, d.h. der Anzahl der mobilen Einheiten 2 und deren räumlichen Abstand, kann es vorteilhaft und ausreichend sein, wenn die einzelnen mobilen Einheiten 2 jeweils lediglich benachbarte mobile Einheiten 2 vermessen. Die entsprechenden Daten können dann zwischen diesen und den weiteren mobilen Einheiten 2 über das Schwarmnetzwerk 4 ausgetauscht werden. Prinzipiell ist es alternativ oder zusätzlich jedoch ebenso möglich, dass jede mobile Einheit 2 die Relativpositionen aller übrigen mobilen Einheit 2 vermisst.

In der vorliegenden beispielhaften Ausführungsform ist das Positionssensorsystem 9 hierzu mit einem Richtungsbestimmungssystem 11, z.B. ein optisches und/oder ein Infrarot-Kamerasystem mit 360° Sichtabdeckung, sowie einer Emissionseinrichtung 7 zur Aussendung von elektromagnetischen Signalen, z.B. Lichtsignalen, ausgestattet. Die Signale werden hierbei mit dem Richtungsbestimmungssystem 11 der jeweiligen mobilen Einheit 2 zur Bestimmung der Relativposition erfasst. Beispielsweise kann die Emissionseinrichtung 7 jeder mobilen Einheit 2 ein bestimmtes codiertes Lichtsignal in unterschiedliche Richtungen pulsiert oder in Dauerstrich aussenden, welches die jeweilige mobile Einheit 2 gegenüber den übrigen Einheiten eindeutig identifizierbar macht. Mittels derartiger elektromagnetischer Signale können insbesondere Richtungsvektoren R der jeweiligen mobilen Einheit 2 zu den benachbarten mobilen Einheiten 2 erfasst werden.

Die mobilen Einheiten 2 können somit über das Positionssensorsystem 9 ihre eigene Absolutposition sowie die Relativpositonen der übrigen Einheiten 2 messen bzw. abschätzen. Hierbei unterliegt die Messung der Absolutposition den oben genannten systematischen Ungenauigkeiten. In einem realistischen Anwendungsfall entspricht die gemessene Absolutposition somit aufgrund der Driftfehler nicht der tatsächlichen physikalischen Positionen der jeweiligen mobilen Einheit 2. Die Relativpositionen hingegen, d.h. die Richtungsvektoren zu den übrigen mobilen Einheiten 2, gehen aufgrund des Messprinzips von den tatsächlichen Positionen der mobilen Einheiten 2 aus und können somit zur Verbesserung der Abschätzung der tatsächlichen Positionen herangezogen werden, was sich die vorliegende Erfindung zunutze macht.

Die mobilen Einheiten 2 werden von einer zentralen Steuereinrichtung 10 an Bord gesteuert und navigiert, wozu die Steuereinrichtung 10 auf der mobilen Einheit 2 mit einer Flugführungseinheit 6 und einem in Fig. 2 nicht dargestellten Antrieb gekoppelt ist. Die Flugführungseinheit 6 wiederum ist kommunikativ mit dem Positionssensorsystem 9 und der Kommunikationseinheit 8 verbunden. Entsprechende Steuersignale werden kontinuierlich über das Schwarmnetzwerk 4 mit den übrigen mobilen Einheiten 2 ausgetauscht.

Prinzipiell kann der Schwarm 1 für völlig unterschiedliche Anwendungszwecke eingesetzt werden, wie beispielsweise militärische Operationen einschließlich luftgestützter Luftraumaufklärung und Luftüberwachung sowie taktischen Angriffseinsätzen. Darüber hinaus kann ein derartiges Drohnensystem jedoch ebenso für nichtmilitärische Kontroll- und Überwachungsaufgaben, Logistik- und Transport-Zwecke, Grenzüberwachung, Katastrophenschutz, Forschungseinsätze usw. genutzt werden.

In einer beispielhaften Anwendung kann der kollaborierende Drohnenschwarm 1 als hochflexibles Radarsystem zum Einsatz kommen. In diesem Fall kann jede mobile Einheit 2 jeweils weiterhin eine Radarantenneneinheit zum Aussenden und Empfangen von Radarstrahlung tragen. Die Komponenten eines klassischen Radars werden hierbei auf ein Netzwerk aus mobile Einheiten 2 verteilt, um dem Radar derart eine hohe Flexibilität und Robustheit gegenüber herkömmlichen Radarsystemen der taktischen Luftraumaufklärung bzw. Luftraumüberwachung zu geben. Das System könnte somit entsprechende herkömmliche fliegende Radarsysteme wie beispielsweise "Airborne Early Warning and Control Systems" (AWACS) ersetzen und/oder ergänzen. Beispielsweise kann ein derartiges Radarsystem zur Gefechtsfeldaufklärung oder frühen Erkennung von anfliegenden Flugkörpern beim Selbstschutz von Schiffen, Gebäuden usw. zur Anwendung kommen. Das System kann entweder aktiv als klassische Radarfunktion oder passiv zur Aufklärung von gegnerischen Signalen verwendet werden. Aufgrund der praktisch frei wählbaren Geometrien können die Radareigenschaften jederzeit angepasst werden. Insbesondere werde bestimmte Geometrien und Anordnungen überhaupt erst möglich, da diese nicht mehr durch die Bauform des Radars limitiert werden. Durch die Verwendung von fliegenden Plattformen wäre das System nicht mehr bodengebunden und könnte sich insbesondere in der Vertikalen frei bewegen, wodurch die Vorteile von fliegenden Radarsystemen (AWACs) beibehalten werden wie Gefechtsfeldaufklärung oder frühere Erkennung von anfliegenden Flugkörpern beim Selbstschutz von Schiffen. Da ein Ausfall von einzelnen Drohnen keinen Systemausfall zur Folge hat und die Drohnen schnell verlegt werden können, ist eine Bekämpfung des Gesamtsystems gravierend erschwert.

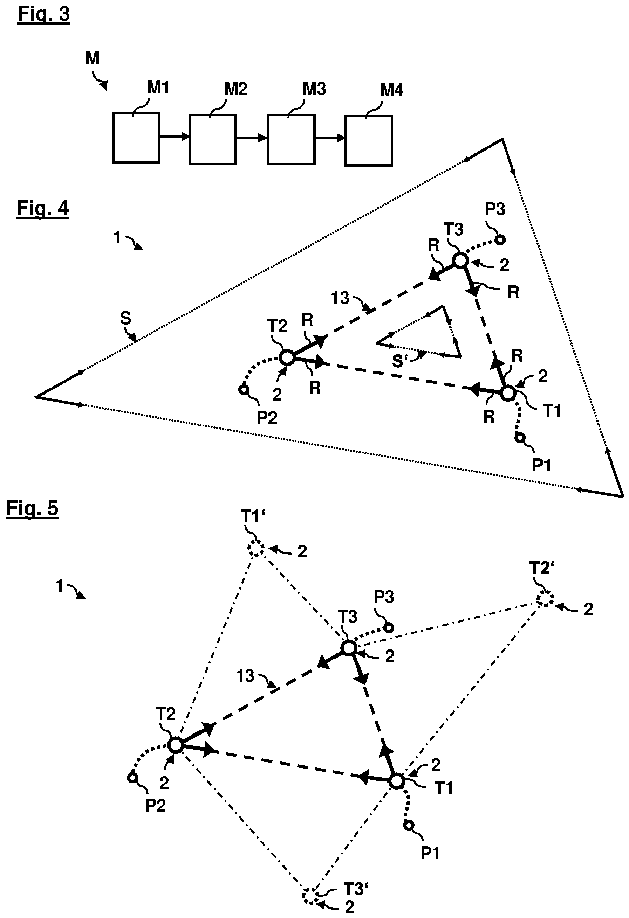

Unabhängig von dem konkreten Einsatzzweck sind die Steuereinrichtungen 10 der mobilen Einheiten 2 zur Durchführung eines Verfahrens M gemäß Fig. 3 ausgebildet, wozu die mobilen Einheiten 2 in Kommunikation mit den übrigen mobilen Einheiten 2 über das Schwarmnetzwerk 4 stehen.

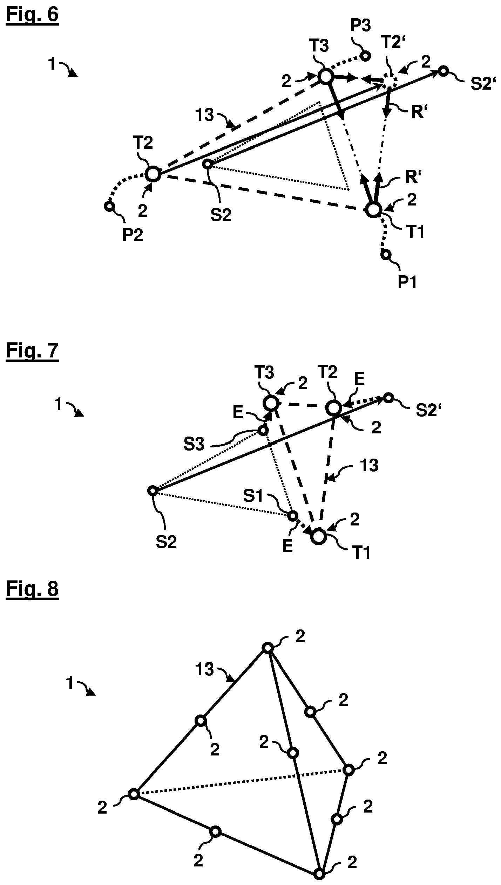

Das Verfahren M umfasst unter M1 Einnehmen einer Basisvernetzungsstruktur 13 durch die mobilen Einheiten 2 innerhalb der Bewegungsformation. Die Basisvernetzungsstruktur 13 definiert hierbei eine relative geometrische Grundanordnung in der Positionierung der mobilen Einheiten 2 innerhalb der Bewegungsformation. Beispiele für eine derartige Basisvernetzungsstruktur 13 werden mit Bezug auf Fig. 4 bis 8 besprochen, wobei die mobilen Einheiten 2 in Fig. 4 bis 7 an den Eckpunkten von Dreiecken positioniert sind. In Fig. 8 ist ein Beispiel für eine Anordnung in einem Tetraedersystem dargestellt, welches insgesamt 11 mobile Einheiten enthält (in Fig. 8 sind neun davon sichtbar), die an den Eckpunkten mehrerer miteinander verbundener Tetraeder angeordnet sind.

Ein Dreieck bzw. Tetraeder stellt hierbei eine besonders vorteilhafte geometrische Grundstruktur für die Konstellation der mobilen Einheiten 2 dar, da einzelne Einheiten in besonders einfacher Weise zu dem Schwarm 1 ergänzt werden können, da pro zusätzlicher Einheit 2 lediglich ein zusätzlicher Tetraeder angebaut werden muss (die neu hinzukommende Einheit 2 bildet hierbei einen Eckpunkt des neuen Tetraeders, während bereits vorhandene mobile Einheiten 2 die übrigen Eckpunkte darstellen).

Die konkret gewählt Definition der Basisvernetzungsstruktur 13 kann hierbei entsprechend zu den jeweiligen Missionsrandbedingungen gewählt werden und auf die jeweils beste Navigationsperformance optimiert sein. In anderen Ausführungen kann die Basisvernetzungsstruktur 13 entsprechend ein allgemeines Netzwerk aus (ggf. regulären) Polygonen und/oder Polyedern darstellen, an deren Eckpunkten die mobilen Einheiten 2 positioniert sind.

Mit den oben beschriebenen Grundvorgaben kann nun ein Netz bzw. Gitter aus den mobilen Einheiten 2 aufgespannt werden, wobei jeder mobilen Einheit 2 eine entsprechende Position zugewiesen wird. Der Vernetzungsprozess kann dabei unterschiedlich umgesetzt werden. Eine besonders einfache Vernetzungsvariante stellt eine sequenzielle Zuweisung an zuvor berechneten Positionen dar, d.h. die mobilen Einheiten 2 werden unabhängig von ihrer aktuellen Position nacheinander an die entsprechenden Positionen kommandiert. Ausgehend von einer zufälligen Anfangskonstellation der mobilen Einheiten 2 kann alternativ eine rand- oder mittelpunktinitiierte Netzausbildung unter Berücksichtigung der aktuellen Positionen durchgeführt werden.

Das Verfahren M umfasst unter M2 weiterhin kontinuierliches gegenseitiges Vermessen M2 der aktuellen Relativpositionen der mobilen Einheiten 2 durch die mobilen Einheiten 2 und unter M3 dynamisches Anpassen M3 der aktuellen Relativpositionen durch die mobilen Einheiten 2 entsprechend der Basisvernetzungsstruktur 13. Die einmal eingenommene Basisvernetzungsstruktur 13 wird somit konsequent aktiv kontrolliert und entsprechend angepasst. Mit einer derartigen vorgegebenen Positionsanordnung der mobilen Einheiten 2 und gegenseitigen Vermessungen untereinander kann eine höhere Navigationsleistung des Schwarms 1 und der einzelnen teilnehmenden Einheiten 2 erreicht werden.

Um die konkrete Basisvernetzungsstruktur 13 und damit die geometrische Konstellationsgestaltung der mobilen Einheiten 2 in optimaler Weise festzulegen, kann ein Optimierungsansatz verfolgt werden, z.B. ein Gradientenverfahren oder dergleichen. Beispielsweise kann ein entsprechendes navigationsrelevantes Gütefunktional als Grundlage hierfür dienen, dessen Spur für die Bestimmung der optimalen Anordnung berechnet werden kann. Für die Bildung des Gütefunktionals können weitere Parameter wie z.B. Dilution-of-Precision Minimierung (DOP) oder Observability-Maximierung herangezogen werden. Neben der Konstellationsgestaltung können weitere Aspekte der Bildung der Bewegungsformation entsprechend optimiert werden, z.B. die Netzausbildung (punkt- oder mehrpunktinitiiert, randinitiiert, mittelpunktinitiiert usw.) sowie die Volumen/Flächen-Vorgabe der Konstellation (Gesamtgeometrie der Bewegungsformation, Packungsdichte, Randvorgaben, Abstände). Auf einer derartigen Basis können entsprechende optimale Lösungen auf iterativer Basis gefunden werden, z.B. mittels LSQ-Verfahrens.

Ferner umfasst das Verfahren M unter M4 individuelles oder gemeinschaftliches Durchwechseln M4 der Positionierungen der mobilen Einheiten 2 in der Bewegungsformation unter Einhaltung der Basisvernetzungsstruktur 13. Hierbei werden die aktuellen Relativpositionen nach jeder Neupositionierung erneut vermessen und die Ergebnisse der neuvermessenen aktuellen Relativpositionen zur Präzisierung bzw. Verbesserung einer Messung der Absolutpositionen der mobilen Einheiten 2 verwendet. Dieses Durchwechseln der Positionierungen kann kontinuierlich solange fortgesetzt werden, bis eine vorgegebene Positionsgenauigkeit für die Bewegungsformation erreicht ist. Mit Bezug auf Fig. 4 bis 8 wird diese navigationsoptimierte Konstellationsgestaltung an vereinfachten Beispielen erläutert. Hierbei können die einzelnen mobilen Einheiten 2 unter Beibehaltung der Basisvernetzungsstruktur 13 einzeln oder in mehr oder weniger großen Verbunden des Schwarms 1 derart kommandiert werden, dass sich aus den neu kommandierten Positionen und entsprechenden Neuvermessungen eine bessere Beobachtung des Gesamtsystems und damit eine Restfehlerminimierung ergibt.

Fig. 4 zeigt hierzu konkret eine schematische Ansicht einer Basisvernetzungsstruktur 13 für den Schwarm 1 aus Fig. 1 einschließlich Skalierungsfehler.

In dem vereinfachten Beispiel der Fig. 4 sind drei mobile Einheiten 2 in einem Dreieck als Basisvernetzungsstruktur 13 angeordnet (allgemeiner in drei Dimensionen würde dies einem Tetraeder entsprechen). Jede mobile Einheit 2 stellt eine Messung/Schätzung seiner Absolutposition P1-P3 bereit, welche jedoch fehlerbehaftet ist (Anfangsfehler, Drift etc.). Ferner stellt jede mobile Einheit 2 gemessene Relativpositionen in Form von Richtungsvektoren R zu den übrigen Einheiten 2 bereit. Diese Richtungsvektoren R werden von den tatsächlichen Positionen T1-T3 der Einheiten 2 ausgehend gemessen, wobei sich eine individuelle Abweichung zwischen den Absolutposition P1-P3 und den tatsächlichen Positionen T1-T3 ergibt (gestrichelte Linien in Fig. 4). Ferner unterliegen auch die Messungen der Relativpositionen Skalierungsfehlern. Dies wird in Fig. 4 anhand der zwei zusätzlichen beispielhaften Basisvernetzungsstrukturen 13 mit Skalierungsfehlern S und S' demonstriert, welche identische Richtungsvektoren R zwischen den mobilen Einheiten 2 aufweisen. Allein aufgrund der Messungen der Relativvektoren kann zwischen diesen unterschiedlichen Ausdehnungen der Basisvernetzungsstrukturen 13 nicht unterschieden werden. Diese Skalierungsfehler beeinflussen ebenfalls die Positionsschätzungen der mobilen Einheiten 2 und damit die Positionsgenauigkeit der gesamten Bewegungsformation der mobilen Einheiten 2.

Fig. 5 zeigt die Basisvernetzungsstruktur 13 aus Fig. 4 mit möglichen Positionierungswechseln der mobilen Einheiten 2 im Zuge des Verfahrensschritts M4 aus Fig. 3.

Die oben erwähnten Fehlerquellen sind vorzeichenbehaftet und können beispielsweise durch gespiegelte Beobachtungskonstellationen eliminiert werden. In dem Beispiel der Fig. 5 wird dies dadurch erreicht, dass jede der mobilen Einheiten 2 eine neue Position zur verbesserten Beobachtung einnimmt, wobei die Positionierung der Einheiten 2 jeweils an den Seitenkanten des Dreiecks, d.h. der Basisvernetzungstruktur 13 gespiegelt wird. Es ergeben sich gewechselte tatsächliche Positionen T1'-T3'. Zu beachten ist hierbei, dass die Basisvernetzungstruktur 13 erhalten bleibt (punktstrichelte Dreiecke in Fig. 5), jedoch die Bewegungsformation der mobilen Einheiten 2, d.h. deren absolute Positionierung und Orientierung in der Fläche bzw. im Raum, gespiegelt wird. In einer entsprechenden dreidimensionalen Verallgemeinerung dieses Beispiels würden die Positionierungen an Flächen von Tetraedern gespiegelt werden.

Die einzelnen mobilen Einheiten 2 können hierbei nacheinander und/oder gleichzeitig ihre Positionen wechseln. Die Positionswechsel liefern hierbei zusätzliche Beobachtungen/Richtungsmessungen, mittels derer mögliche Skalierungsfehler eliminiert werden können. Aktive Konstellationsänderungen unter Beibehaltung der Basisvernetzungstruktur 13 dienen somit hierbei zur Verbesserung der Navigationslösung. Dies wird mit Bezug auf Fig. 6 und 7 verdeutlicht.

Diese Figuren zeigen schematische Ansichten der Basisvernetzungsstruktur 13 aus Fig. 5 nach dem Positionierungswechsel einer mobilen Einheit 2 von der tatsächlichen Position T2 zu der tatsächlichen Position T2'. Auch in diesem Fall wird wie in Fig. 5 eine Spiegelung an der gegenüberliegenden Seite des Dreiecks der Basisvernetzungsstruktur 13 durchgeführt (durchgezogene Pfeile in Fig. 6). In dem Beispiel der Fig. 6 wird jedoch davon ausgegangen, dass die Positionen einen Skalierungsfehler aufweisen, d.h. die Spiegelung wird mit einer Positionsverschiebung entsprechend der Distanz zwischen der skalierungsfehlerbehafteten Position S2 zu der Position S2' durchgeführt (Spiegelung an der rechten Seite des inneren Dreiecks in Fig. 6).

Anschließend werden die Relativpositionen, d.h. die Richtungsvektoren R, an den neuen tatsächlichen Positionen T1, T2' und T3 neu bestimmt. Die nun angenommenen Positionen können im Folgenden als Startlösung für eine erneute Positionsermittlung herangezogen werden. Wird diese Strategie iterativ verfolgt, so können die Absolutpositionen auf der Basis von LSQ-Gleichungssystemen oder Filterungsansätzen der mobilen Einheiten 2 derart ermittelt werden, dass die Messungen am besten erfüllt sind und die anfängliche Abweichung der verschobenen Einheiten 2 stets abnehmen. Es stellt sich somit eine tendenzielle Konvergenzrichtung ein, wie sie anhand der mit Pfeilen angedeuteten Korrekturtendenzen E in Fig. 7 eingezeichnet ist. Damit wird erreicht, dass der anfängliche Skalierungsfehler aus der ersten Positionsermittlung abnimmt und bei der sequenziellen Anwendung auf alle Einheiten 2 weitestgehend eliminiert wird.

Ein derartiges Optimierungsverfahren kann während eines Einsatzes des Schwarms 1 kontinuierlich durchgeführt werden. Sofern das Verfahren möglichst frühzeitig eingesetzt wird, können Restfehler in den Navigationslösungen von Anfang an klein gehalten werden. Grundsätzlich ist die beschriebene Methode jedoch ebenso für andere Arten von Positionsänderungen und unterschiedliche Anzahlen von bewegten mobilen Einheiten 2 einsetzbar. Beispielsweise kann die eigentliche Bewegungsformation bei dem Durchwechseln der Positionierungen auch unverändert bleiben. In einem konkreten Beispiel können die mobilen Einheiten 2 paarweise gewechselt oder in größeren Gruppen permutiert werden. In anderen Beispielen kann auch die gesamte Bewegungsformation gedreht und/oder gespiegelt werden. Beispielsweise kann die Formation in Fig. 8 im dreidimensionalen Raum gedreht oder gespiegelt werden, wobei sich die grundlegende Basisvernetzungstruktur 13, d.h. die Tetraederstruktur, nicht ändert. Auch in diesem Fall können Neuvermessungen an den neu eingenommenen Positionen erfolgen, die für eine Präzisierung der Positionsgenauigkeit herangezogen werden können.

Generell kann das Verfahren zentral oder dezentral gesteuert werden. Ein zentralisierter Ansatz kann beispielsweise vorsehen, dass die Messungen und Zustandsschätzungen aller mobiler Einheiten 2 an einer Stelle verarbeitet werden und die resultierende Ergebnisse samt zugehöriger Steuerbefehle anschließend verteilt werden. Beispielsweise kann die Steuereinrichtung 10 einer bestimmten mobilen Einheit 2 zumindest vorübergehend als derartige zentrale Prozessierungsstelle fungieren. Diese Aufgabe kann zwischen den mobilen Einheiten 2 gewechselt werden.

Ein dezentraler Ansatz kann hingegen vorsehen, dass die verfügbaren Informationen in allen Einheiten 2 lokal prozessiert und anschließend über das Schwarmnetzwerk 4 weiterverteilt werden. Jede Einheit 2 könnte somit autark eigene Positions- und Navigationsupdates berechnen. Prinzipiell muss die Bestimmung der Absolutpositionen hierbei nicht über eine Strapdown-Propagation realisiert sein, sondern kann auch über andere Messansätze realisiert sein.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Schwarm mobiler unbemannter Einheiten/Drohnen
- 2: mobile unbemannter Einheit/Drohne
- 3: Systemsteuereinrichtung
- 4: Schwarmnetzwerk
- 5: Trägheitsnavigationssystem
- 6: Flugführungseinheit
- 7: Emissionseinrichtung
- 8: Kommunikationseinheit
- 9: Positionssensorsystem
- 10: Steuereinrichtung
- 11: Richtungsbestimmungssystem
- 12: Steuerungsnetzwerk
- 13: Basisvernetzungsstruktur
- P1-P3: gemessene Absolutposition
- R: Richtungsvektor
- R': gewechselter Richtungsvektor
- T1-T3: tatsächliche Position
- T1'-T3': gewechselte tatsächliche Position
- S, S': Basisvernetzungsstruktur mit Skalierungsfehler
- S1-S3: tatsächliche Position mit Skalierungsfehler
- S1'-S3': gewechselte tatsächliche Position mit Skalierungsfehler
- E: Korrekturtendenz
- M: Verfahren
- M1-M4: Verfahrensschritt

## Patentansprüche

1. Verfahren (M) zur Verbesserung einer Navigationsgüte durch aktive Gestaltung einer Bewegungsformation eines kollaborierenden Schwarms (1) aus mobilen unbemannten Einheiten (2), insbesondere einer Flugformation eines Schwarms aus Drohnen, wobei jede mobile Einheit (2) aufweist:
ein Positionssensorsystem (9), welches zur Bestimmung einer momentanen Absolutposition (P) der jeweiligen mobilen Einheit (2) und momentanen Relativvermessungen zumindest von benachbarten mobilen Einheiten (2) gegenüber der jeweiligen mobilen Einheit (2) in der Bewegungsformation ausgebildet ist;
eine Kommunikationseinheit (8) zur Datenkommunikation der jeweiligen mobilen Einheit (2) mit den übrigen mobilen Einheiten (2) über ein drahtloses Schwarmnetzwerk (4); und
eine Flugführungseinheit (6), welche zur Kommandierung und Umsetzung einer Bewegung der jeweiligen mobilen Einheit (2) ausgebildet ist;
wobei das Verfahren umfasst:
Einnehmen (M1) einer Basisvernetzungsstruktur (13) durch die mobilen Einheiten (2) innerhalb der Bewegungsformation, wobei die Basisvernetzungsstruktur (13) eine relative geometrische Grundanordnung in der Positionierung der mobilen Einheiten (2) innerhalb der Bewegungsformation definiert; kontinuierliches gegenseitiges Bestimmen (M2) der aktuellen Relativvermessungen der mobilen Einheiten (2) durch die mobilen Einheiten (2);
dynamisches Anpassen (M3) aktueller Relativpositionen durch die mobilen Einheiten (2) entsprechend der Basisvernetzungsstruktur (13); und
individuelles oder gemeinschaftliches Durchwechseln (M4) der Positionierungen der mobilen Einheiten (2) in der Bewegungsformation unter Einhaltung der Basisvernetzungsstruktur (13), wobei die aktuellen Relativvermessungen nach oder während jeder Neupositionierung erneut bestimmt werden, wobei eine Bestimmung der Absolutpositionen (P) der mobilen Einheiten (2) auf Basis der neubestimmten aktuellen Relativvermessungen präzisiert wird.

2. Verfahren (M) nach Anspruch 1, wobei das Durchwechseln (M4) der Positionierungen kontinuierlich fortgesetzt wird, um eine vorgegebene Positionsgenauigkeit für die Bewegungsformation zu erreichen und/oder zu halten.

3. Verfahren (M) nach einem der Ansprüche 1 und 2, wobei die Basisvernetzungsstruktur (13) ein Netzwerk von Polygonen und/oder Polyedern darstellt, an deren Eckpunkten die mobilen Einheiten (2) positioniert sind.

4. Verfahren (M) nach Anspruch 3, wobei die mobilen Einheiten (2) an den Eckpunkten von Dreiecken und/oder Tetraedern positioniert sind.

5. Verfahren (M) nach einem der Ansprüche 1 bis 4, wobei die Bewegungsformation bei dem Durchwechseln (M4) der Positionierungen unverändert bleibt.

6. Verfahren (M) nach Anspruch 5 , wobei das gemeinschaftliche Durchwechseln (M4) der Positionierungen einen paarweisen Positionstausch zweier mobiler Einheiten (2) und/oder eine Positionspermutation dreier oder mehr mobiler Einheiten (2) umfasst.

7. Verfahren (M) nach einem der Ansprüche 1 bis 4, wobei das Durchwechseln (M4) der Positionierungen eine Spiegelung und/oder eine Rotation zumindest eines Bereichs der Bewegungsformation der mobilen Einheiten (2) unter Beibehaltung der Basisvernetzungsstruktur (13) umfasst.

8. Verfahren (M) nach Anspruch 7, wobei die Positionierungen einzelner und/oder mehrerer mobiler Einheiten (2) an Flächen oder Kanten der Basisvernetzungsstruktur (13) gespiegelt wird.

9. Verfahren (M) nach einem der Ansprüche 1 bis 8, wobei das Positionssensorsystem (9) ein Trägheitsnavigationssystem (5) umfasst, mit dem die Absolutposition (P) bestimmt wird.

10. Verfahren (M) nach einem der Ansprüche 1 bis 9, wobei das Bestimmen (M2) der Relativvermessungen Bestimmen von Richtungsvektoren (R) der jeweiligen mobilen Einheit (2) zu den benachbarten mobilen Einheiten (2) umfasst.

11. Verfahren (M) nach einem der Ansprüche 1 bis 10, wobei das Positionssensorsystem (9) ein Richtungsbestimmungssystem (11) umfasst, mit dem die Richtungsvektoren (R) bestimmt werden.

12. Verfahren (M) nach einem der Ansprüche 1 bis 10, wobei das Richtungsbestimmungssystem (11) zumindest eines von einem Kamerasystem und einem Antennenpeilsystem umfasst.

13. Verfahren (M) nach Anspruch 11 oder 12, wobei die mobilen Einheiten (2) weiterhin jeweils mit einer Emissionseinrichtung (7) zur Aussendung von elektromagnetischen Signalen ausgebildet sind, welche mit dem Richtungsbestimmungssystem(11) der jeweiligen mobilen Einheit (2) zur Bestimmung der Richtungsvektoren (R) erfasst werden.

14. Verfahren (M) nach einem der Ansprüche 1 bis 13, wobei das Bestimmen (M2) der Relatiwermessungen Bestimmen von relativen Entfernungen der jeweiligen mobilen Einheit (2) zu den benachbarten mobilen Einheiten (2) umfasst.

15. Kollaborierender Schwarm (1) aus einer Vielzahl mobiler unbemannter Einheiten (2), insbesondere Drohnen, welche jeweils umfassen:
ein Positionssensorsystem (9), welches zur Bestimmung einer momentanen Absolutposition (P) der jeweiligen mobilen Einheit (2) und momentanen Relativvermessungen zumindest von benachbarten mobilen Einheiten (2) gegenüber der jeweiligen mobilen Einheit (2) in einer Bewegungsformation der mobilen Einheiten (2) ausgebildet ist;
eine Kommunikationseinheit (8) zur Datenkommunikation der jeweiligen mobilen Einheit (2) mit den übrigen mobilen Einheiten (2) über ein drahtloses Schwarmnetzwerk (4);
eine Flugführungseinheit (6), welche zur Kommandierung und Umsetzung einer Bewegung der jeweiligen mobilen Einheit (2) ausgebildet ist; und
einer Steuereinrichtung (10), welche zur Steuerung der jeweiligen mobilen Einheit (2) in Kommunikation mit den übrigen mobilen Einheit (2) über das Schwarmnetzwerk (4) zur Durchführung eines Verfahrens (M) nach einem der Ansprüche 1 bis 14 ausgebildet ist.
